# EUROPEAN PATENT APPLICATION

(11) **EP 4 610 107 A1**
(43) Date of publication of application: **03.09.2025**
(21) Application number: 23882220.9
(22) Date of filing: 28.08.2023
(51) Int. Cl.: B60Q 1/24, B60Q 1/04, B60Q 1/18, F21S 41/148, F21S 41/32, F21W 102/10, F21Y 115/10

(54) **WORK VEHICLE**

(30) Priority: 28.10.2022 JP 2022173418
(71) Applicant: Kubota Corporation, Osaka 556-8601 (JP)
(72) Inventor: OKAMOTO, Naoya, Sakai-shi, Osaka 590-0908 (JP); YAMANAKA, Satoru, Sakai-shi, Osaka 590-0908 (JP); OSHITA, Masafumi, Sakai-shi, Osaka 590-0908 (JP)
(74) Representative: Cabinet Beau de Loménie
(86) International application number: PCT/JP2023/030915
(87) International publication number: WO 2024/090005

(57) **Abstract**

This work vehicle includes a body supported by a front travel device 10F and a rear travel device 10R, a motor section 2 in a front portion of the body, and a driving section 3 rearward of the motor section 2 in the body. The front travel device 10F is located forward of the driving section 3 and laterally outward of a lateral side portion of the motor section 2 at a distance from the lateral side portion in a left-right direction, the front travel device 10F has a ground contact portion PG rearward of a front end of the motor section 2, the motor section 2 includes a headlight 5 that illuminates an area ahead of the body, and the light distribution area Z of the headlight 5 includes an area rearward of the front end of the ground contact portion PG.

## Description

### Technical Field

The present invention relates to a work vehicle having headlights that are provided in a motor section in a front portion of a body of the vehicle and illuminate the area ahead of the body.

### Background Art

This type of work vehicle includes headlights for illuminating the area ahead in the direction in which the vehicle travels when performing work or traveling on a road at night. However, although the headlights alone can illuminate the area ahead in the overall direction in which the vehicle travels, it has been difficult to illuminate the area where the front wheels will actually travel, such as the ground, crops, or the like directly in front of the front wheels. Therefore, work lights have been provided in addition to the headlights in order to illuminate the area directly in front of the front wheels (see Patent Document 1, for example).

### Prior Art Document

### Patent Document

Patent Document 1: JP 2016-175443A

### Disclosure of the Invention

### Problem to be Solved by the Invention

In the technology described in Patent Document 1, a separate work light is installed to illuminate the ground, crops, or the like directly in front of the front wheels, thus making it possible to illuminate the area where the front wheels will travel, but this inevitably increases the number of parts, and there is room for improvement in that it is difficult to suppress an increase in the manufacturing cost.

An object of the present invention is to provide a work vehicle capable of illuminating the ground, crops, or the like directly in front of the front wheels through an innovation regarding the location of the headlights themselves and the illumination range.

### Means for Solving Problem

A work vehicle according to an aspect of the present invention includes: a front travel device; a rear travel device; a body supported by the front travel device and the rear travel device; a motor section in a front portion of the body; and a driving section rearward of the motor section in the body, the front travel device being located forward of the driving section and laterally outward of a lateral side portion of the motor section at a distance from the lateral side portion in a left-right direction, the front travel device having a ground contact portion rearward of a front end of the motor section, the motor section including a headlight configured to illuminate an area ahead of the body, and the headlight having a light distribution area including an area rearward of a front end of the ground contact portion.

According to the present invention, the light distribution area of the headlight that illuminates the area ahead of the body is set to include an area rearward of the front end of the ground contact portion of the front travel device. As a result, it is easier to drive the vehicle while making the ground, crops, or the like directly in front of the front travel device easier to see with light emitted from the headlight.

This has an advantage of making it possible to reliably grasp the travel direction of the front travel device, the position of crops, and the like while also avoiding an increase in the number of parts and an increase in manufacturing cost caused by, for example, providing a work light in addition to the headlight.

In a preferred embodiment of the present invention, the motor section further includes: a drive source; and a bonnet configured to house the drive source, and the headlight is at a location including an intersection between a front edge of the bonnet and a lateral side wall portion of the bonnet.

According to this configuration, light emitted from the headlight can be more easily dispersed laterally and ahead of the body.

In a preferred embodiment of the present invention, the headlight includes a light source unit including a combination of an LED as a light source and a reflector configured to disperse and reflect light emitted from the LED.

According to this configuration, even if the number of LEDs serving as light sources is small, by adjusting the directions in which light is dispersed by the reflector, it is possible to emit light in multiple directions, thereby making it possible to reduce the number of light sources and making it easy to obtain a low-cost and low-power headlight.

In a preferred embodiment of the present invention, the LED is in an upper portion of the light source unit and emits light downward toward the reflector in a lower portion of the light source unit.

According to this configuration, light emitted from the LED in the upper portion can be reflected by the reflector in the lower portion, and the reflected light can be distributed so as to be accurately dispersed toward a predetermined area.

In a preferred embodiment of the present invention, the headlight is at a location overlapped with a front portion of the front travel device in a front-rear direction.

According to this configuration, the headlight is at a position close to the front portion of the front travel device in the front-rear direction, and can easily illuminate the area ahead while also illuminating the area close to the ground contact portion of the front travel device.

In a preferred embodiment of the present invention, the front travel device is a steerable wheel.

According to this configuration, it is possible to illuminate the area close to the ground contact portion of a steerable wheel that is being turned.

In a preferred embodiment of the present invention, the ground contact portion is outside the light distribution area directly irradiated with light emitted from the headlight.

According to this configuration, instead of directly illuminating the ground contact portion of the front travel device itself with reflected light from the reflector, the light distribution area of the headlight is set such that the ground contact portion of the front travel device is outside the light distribution area directly irradiated with reflected light from the reflector. The light distribution area of the headlight is set to include the area ahead, including an area rearward of the front end of the ground contact portion.

By setting the headlight light distribution area in this manner, the area near the ground contact portion of the front travel device is not directly illuminated with reflected light from the reflector, but can be easily seen with scattered light from, for example, the directly irradiated light distribution area.

Therefore, there is no need to greatly expand the light distribution area of the headlight to include the ground contact portion, thereby making it easier to simplify the structure and reduce the size of the structure.

### Brief Description of the Drawings

FIG. 1 is a left side view of a tractor.
FIG. 2 is a plan view of the tractor.
FIG. 3 is a left side view showing the inside of an engine room of a motor section.
FIG. 4 is a front view showing a positional relationship between the motor section and front wheels.
FIG. 5 is a perspective view of a headlight as viewed obliquely from below on the front left side.
FIG. 6 is a perspective view showing the headlight cut horizontally and viewed obliquely from above on the front left side.
FIG. 7 is a schematic diagram showing a light distribution area of the left headlight.
FIG. 8 is a schematic diagram showing light distribution areas of the left and right headlights.

### Best Mode for Carrying out the Invention

Hereinafter, an embodiment of the present invention will be described with reference to the drawings.

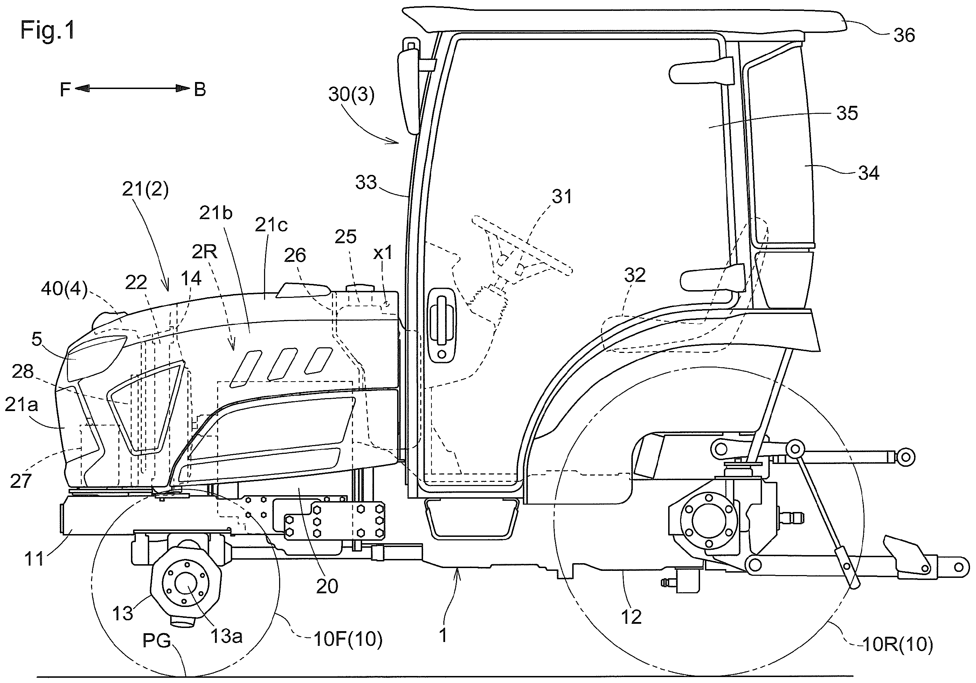

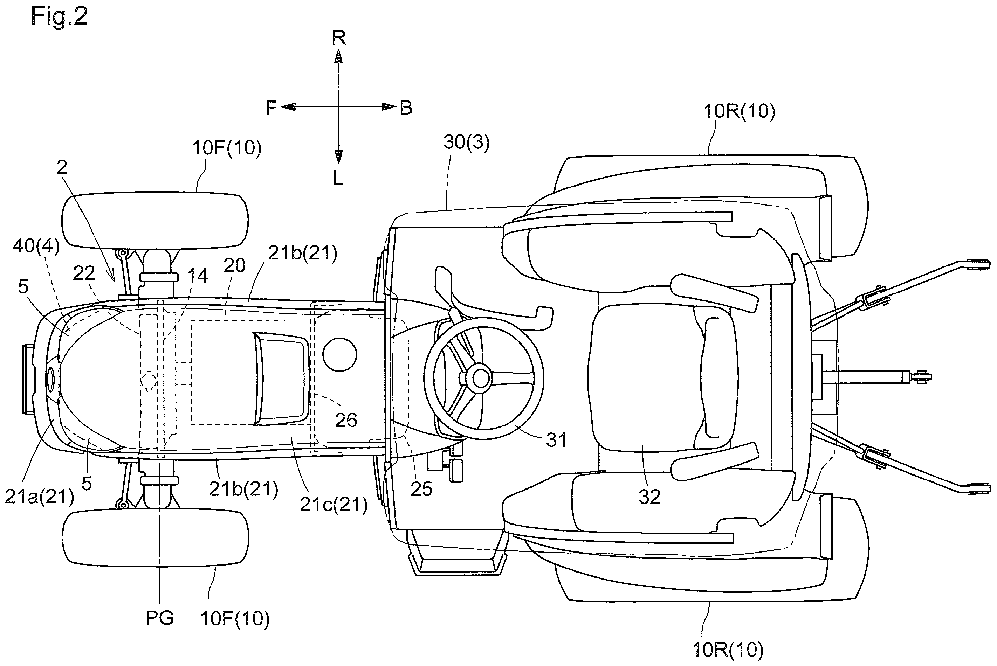

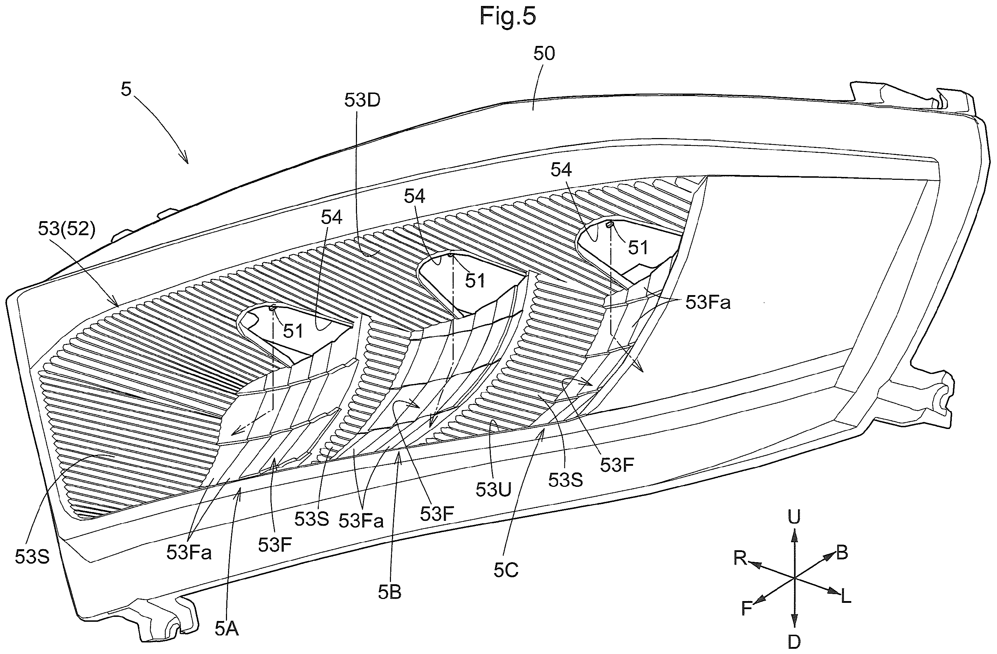

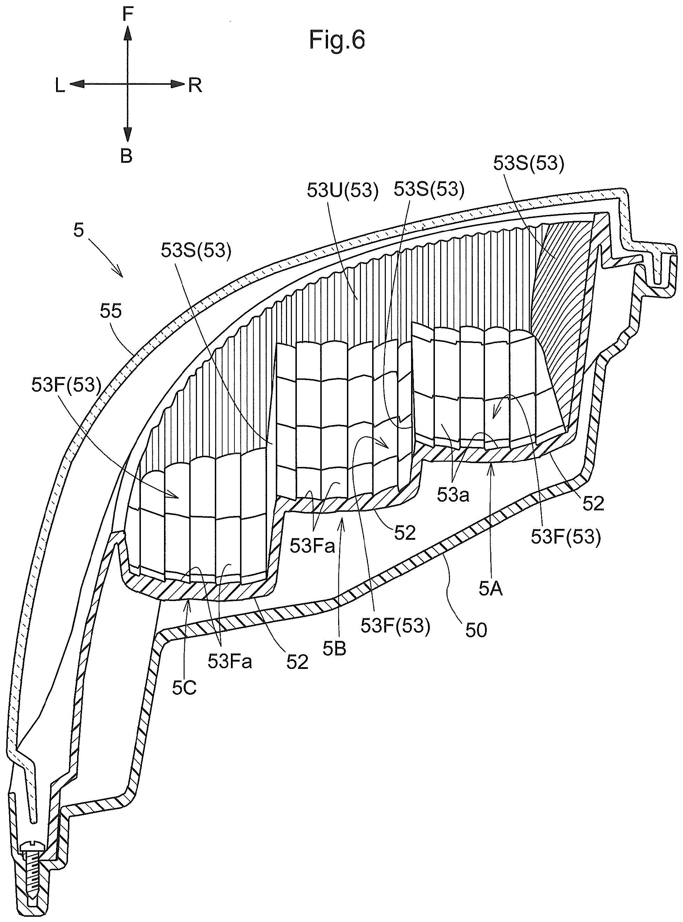

Note that in the description of this embodiment, the front-rear direction and the left-right direction are defined as follows, unless otherwise specified. Specifically, when a tractor (an example of a work vehicle) to which the present invention is applied is traveling for work, the forward travel direction (see arrow F in FIGS. 1 and 2) is "front", the reverse travel direction (see arrow B in FIGS. 1 and 2) is "rear", the direction corresponding to the right side (see arrow R in FIG. 2) with respect to the forward-facing position in the front-rear direction is "right", and similarly, the direction corresponding to the left side (see arrow L in FIG. 2) is "left". The direction corresponding to upward (see arrow U in FIGS. 5 and 6) is "up", and the direction corresponding to downward (see arrow D in FIGS. 5 and 6) is "down".

### Overall Configuration

The tractor, which is an example of a work vehicle shown in the present embodiment, is configured as described below.

As shown in FIG. 1, a motor section 2 is provided in a front portion of a body frame 1 (corresponding to a body), and a driving section 3 is provided in a rear portion of the body frame 1. The body frame 1 is supported by a travel device 10, which includes front wheels 10F (corresponding to a front travel device) which are steerable wheels arranged on the left and right sides of the motor section 2, and non-steerable rear wheels 10R (corresponding to a rear travel device) arranged on the left and right sides of the driving section 3. In the travel device 10, the front portion of the body is supported by the front wheels 10F configuring a front travel device, and the rear portion of the body is supported by the rear wheels 10R configuring a rear travel device. The front wheels 10F and the rear wheels 10R are configured as four-wheel drive type wheels that are each driven to rotate.

The front wheels 10F, which correspond to the front travel device, are steerable wheels, are located forward of the driving section 3, and are provided at positions where they can be seen by the driver when the driver is in a driving position seated in a driver seat 32 of the driving section 3.

The left and right front wheels 10F are disposed at locations laterally outward of the motor section 2 and are separated from lateral side portions of the motor section 2 by an appropriate distance to allow the direction of the steerable front wheels 10F to be changed. A ground contact point PG (corresponding to a ground contact portion) of each of the front wheels 10F is located directly below a front axle 13a and rearward of the front end of the motor section 2, as shown in FIG. 1.

As shown in FIGS. 1 and 2, the body frame 1 includes a front frame 11 connected to a water-cooled diesel engine 20 (hereinafter referred to as the engine) provided as a drive source, a clutch housing (not shown) connected to a rear portion of the engine 20, and a transmission case 12 connected to a rear portion of the clutch housing, and these components are integrated to configure a monocoque structure.

The front wheels 10F are supported by a front axle case 13, and the front axle case 13 is supported by a lower portion of the body frame 1 so as to be capable of rolling about a swing axis (not shown) that extends in the front-rear direction.

### Motor Section

As shown in FIGS. 1 to 3, the motor section 2 includes a metal engine bonnet 21 (corresponding to a bonnet) that forms a space in which the engine 20 and the like are arranged.

An engine room 2R formed inside the engine bonnet 21 is divided into a rear space 2A located rearward of a radiator 22, which is for cooling the engine 20, in the front-rear direction of the body, and a front space 2B located forward of the radiator 22 in the front-rear direction of the body.

The radiator 22 has an intake face 22a on the front side in the front-rear direction of the body, and a cooling fan 22b on the rear side in the front-rear direction of the body, and is configured to draw in cooling air from the front to the rear of the body.

A partition member 14 that separates the front space 2B from the rear space 2A is provided between the outer peripheral portion of the radiator 22 and the inner surface of the engine bonnet 21. The partition member 14 is made of, for example, a sponge-like insulating material made of synthetic resin, and is provided to block the flow of air between the front space 2B and the rear space 2A and also to suppress the transfer of radiant heat.

The rear space 2A, which is located in an area rearward of the radiator 22 in the front-rear direction of the body, is a space for provision of, for example, the engine 20, an air cleaner 23 that filters air supplied to the engine 20, and a DPF (Diesel Particulate Filter) 24, which is an example of an exhaust treatment device. The air cleaner 23 and the DPF 24 are disposed in a small space that is above the engine 20 and between the engine 20 and the engine bonnet 21 in the engine room 2R. In terms of the positional relationship in the front-rear direction, the air cleaner 23 is located forward of and close to the radiator 22, whereas the DPF 24 is provided at a position rearward of the air cleaner 23 and spaced apart from the radiator 22.

A fuel tank 25 is disposed in the space inside the engine bonnet 21 but rearward of the engine 20 and the DPF 24, such that the upper portion and lateral side portions are surrounded by the engine bonnet 21. A heat insulating partition 26 is provided between the fuel tank 25 and the engine 20 and DPF 24 ahead thereof, such that radiant heat from the engine 20 and the DPF 24 is not directly transmitted to the fuel tank 25.

Engine-related devices such as a battery 27, an oil cooler 28, a reserve fuel tank 29, a condenser 37, and the like are arranged in the front space 2B for engine-related devices, which is located in an area forward of the intake face 22a of the radiator 22 in the front-rear direction of the body.

A heat insulating sheet 40 is attached to the inner surface of the upper portion in the front space 2B to form a heat shield layer 4 that suppresses the dissipation of heat from the engine bonnet 21 itself into the front space 2B.

The engine bonnet 21 is an integrated member that includes a front cover portion 21a, which has a ventilated front grille fg covering the front end portion of the motor section 2, left and right side wall portions 21b covering the lateral side portions of the motor section 2, a ceiling wall portion 21c covering the upper portion of the motor section 2, and headlights 5, for example. The engine bonnet 21 is configured such that the front end can open and close by swinging up and down about a laterally-extending support shaft x1 located at the upper portion of a tank support frame 15 extending upright from the body frame 1.

The side wall portions 21b each include a front side grille sg1, which has ventilation holes for taking in outside air into the front space 2B, forward of the radiator 22, and a rear side grille sg2, which has ventilation holes for discharging hot air from the engine room 2R through the rear space 2A to the outside, rearward of the radiator 22.

### Driving Section

The driving section 3, which is provided rearward of the motor section 2, includes a cabin 30 that covers the riding space. A steering wheel 31 for steering the front wheels 10F, a driver seat 32, and the like are provided in the cabin 30.

A front surface 33 and a rear surface 34 of the cabin 30 are made of transparent glass, thereby allowing the driver to see ahead and behind the vehicle body while seated in the driver seat 32. The left side surface of the cabin 30 is constituted by a transparent glass door 35, and the door 35 can be opened and closed to enter and exit the space in the cabin 30.

The cabin 30 also has a transparent glass window on the right side surface (not shown), thereby allowing the driver to see the outside surroundings of the cabin 30 in the front-rear and left-right directions, excluding a roof portion 36, from inside the cabin 30.

### Headlights

The headlights 5 for illuminating the area in front of the body are provided at the front end portion of the engine bonnet 21 in the motor section 2.

The headlights 5 are provided at two locations including the intersections between the front edge of the engine bonnet 21 and the left and right side wall portions 21b.

In terms of the positional relationship between the headlights 5 and the front wheels 10F in the front-rear direction of the body, as shown in FIGS. 1 and 2, the front ends of the front wheels 10F are located slightly rearward of the front end of the engine bonnet 21, and the ground contact points PG of the front wheels 10F are located further rearward. The ground contact points PG of the front wheels 10F are locations directly below the front axle 13a, which has the same rotation axis as the front wheels 10F.

Each of the headlights 5 has an exterior case 50 for housing LEDs (light-emitting diodes) 51 as light sources and reflectors 52 that disperse and reflect light emitted from the LEDs 51, and includes a plurality of light source units 5A, 5B, and 5C each of which is formed by a combination of a LED 51 and a reflector 52.

A group of the light source units 5A, 5B, and 5C is used in each of both the headlight 5 provided on the right side of the engine bonnet 21 and the headlight 5 provided on the left side. In the present embodiment, the headlight 5 provided on the right side and the headlight 5 provided on the left side each include the three light source units 5A, 5B, and 5C.

### Light Source Unit

Each of the light source units 5A, 5B, and 5C is configured as follows.

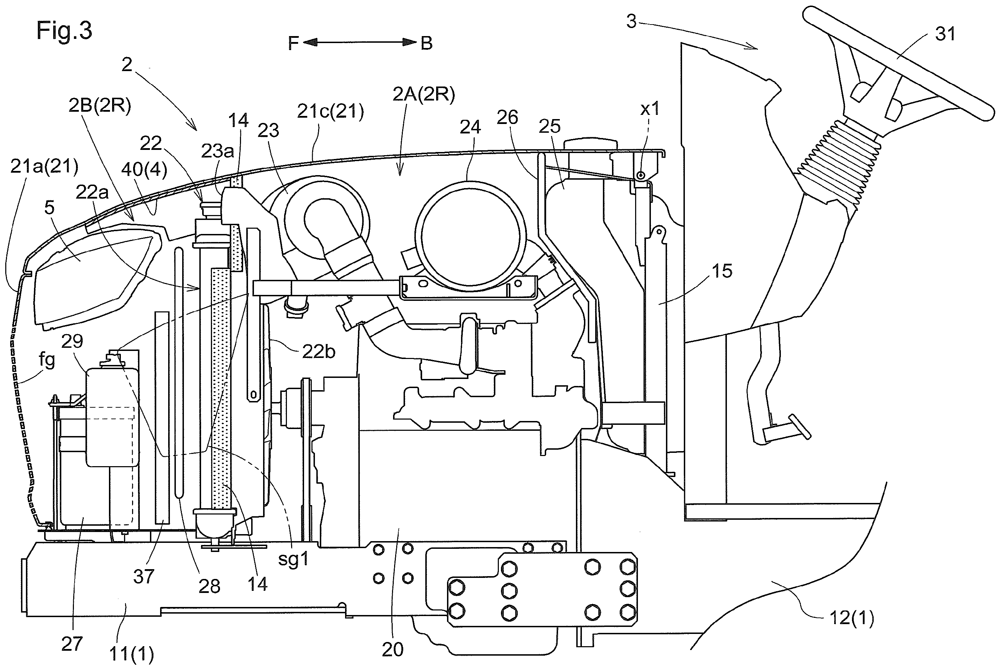

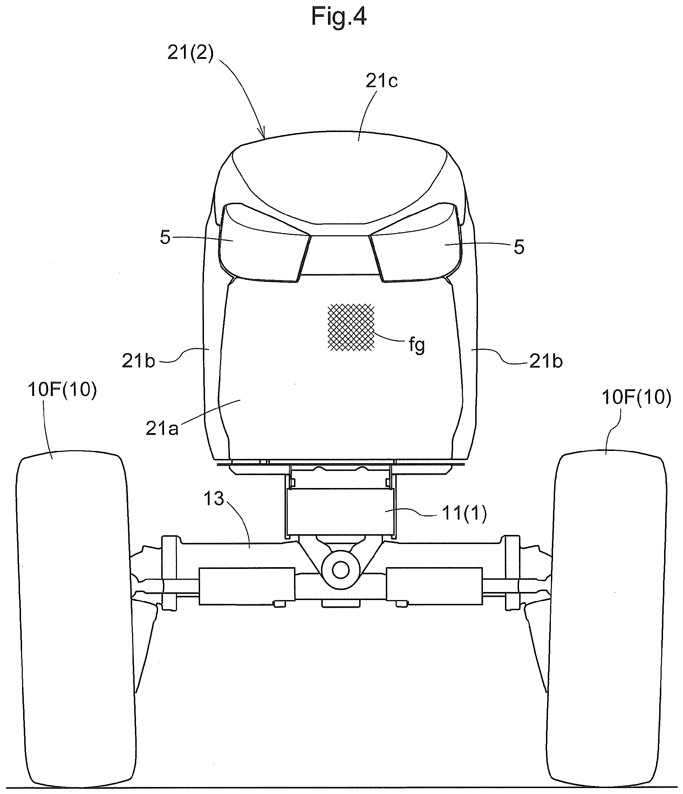

As shown in FIGS. 3 to 8, the light source units 5A, 5B, 5C are disposed at approximately the same height in the up-down direction, and are at positions offset from each other in the left-right direction and the front-rear direction in a plan view. In other words, in a plan view, the light source unit 5A (corresponding to a first unit), which is innermost in the left-right direction of the body, is located frontmost in the front-rear direction of the body, and the light source units 5B and 5C, which are located successively laterally outward, are located successively rearward in the front-rear direction of the body, such that the light source unit 5C (corresponding to a second unit), which is outermost, is located rearmost in the front-rear direction of the body.

In other words, among the LEDs 51 serving as the light sources and the reflectors 52 in the light source units 5A, 5B, and 5C, the LED 51 and the reflector 52 of the light source unit 5A, which are innermost in the left-right direction of the body, are located frontmost in the front-rear direction of the body.

The LED 51 and the reflector 52 of the light source unit 5C that is outermost in the left-right direction of the body are disposed so as to be located rearmost in the front-rear direction of the body.

The LED 51 and the reflector 52 of the light source unit 5B at the intermediate position are located laterally outward and rearward, in the front-rear direction of the body, of the LED 51 and the reflector 52 of the light source unit 5A at the innermost position in the left-right direction of the body, and are located laterally inward and forward, in the front-rear direction of the body, of the LED 51 and the reflector 52 of the light source unit 5C at the outermost position in the left-right direction of the body (see FIGS. 5 to 7).

The reflector 52 provided in each of the light source units 5A, 5B, and 5C has a three-dimensional reflecting surface 53 that is a combination of four surfaces with different reflective directions, namely a forward reflecting surface 53F, a lateral reflecting surface 53S, an upward reflecting surface 53U, and a downward reflecting surface 53D.

An opening 54 is formed in the downward reflecting surface 53D to allow the passage of downward light emitted from the LED 51 provided at a position above the downward reflecting surface 53D, and the downward reflecting surface 53D extends over an area excluding the area where the opening 54 is formed.

The forward reflecting surface 53F is formed as a concave curved surface that protrudes downward and rearward such that, in a forward-facing posture in which the entirety faces substantially forward in the travel direction of the body, the forward reflecting surface 53F extends forward from the upper end to the lower end, and furthermore the area near the center of the forward reflecting surface 53F in the left-right direction is rearward of the areas near the ends.

The lateral reflecting surface 53S is formed on a step that protrudes forward from an end of the forward reflecting surface 53F on the inward side of the body, and is provided so as to face substantially laterally outward in the travel direction of the body.

The upward reflecting surface 53U is formed on an upward surface that is substantially horizontal so as to be located at a forward position connected to the lower end of the forward reflecting surface 53F and at a lateral outward position connected to the lower end of the lateral reflecting surface 53S.

The downward reflecting surface 53D is formed on a downward surface that is substantially horizontal so as to be located at a forward position connected to the upper end of the forward reflecting surface 53F, and at a lateral outward position connected to the upper end of the lateral reflecting surface 53S.

As shown in FIGS. 5 and 6, the forward reflecting surface 53F is provided in a form in which many rectangular small partition portions 53Fa are packed vertically and horizontally, and the collection of small partition portions 53Fa forms a concave curved surface that protrudes downward and rearward as described above.

The small partition portions 53Fa are each provided so as to disperse and reflect light emitted from the LED 51 serving as a light source in a predetermined direction that has been set in advance for the small partition portion 53Fa.

The lateral reflecting surface 53S has a wave-like reflecting surface extending along the front-rear direction, between the upward reflecting surface 53U and the downward reflecting surface 53D. By providing this reflecting surface, emitted light can be dispersed not only forward, but also laterally outward, including in the up-down direction.

The upward reflecting surface 53U has an upward flat portion extending substantially horizontally at a forward position connected to the lower end of the forward reflecting surface 53F and at a lateral outward position connected to the lower end of the lateral reflecting surface 53S, and the flat portion has a wave-like reflecting surface extending in the front-rear direction. By providing this reflecting surface, emitted light can be dispersed not only forward, but also in the left-right direction and upward.

The downward reflecting surface 53D has a downward flat portion extending substantially horizontally at a forward position connected to the upper end of the forward reflecting surface 53F and at a lateral outward position connected to the upper end of the lateral reflecting surface 53S, and the flat portion has a wave-like reflecting surface extending in the front-rear direction. By providing this reflecting surface, emitted light can be dispersed not only forward, but also in the left-right direction and downward.

The LEDs 51 provided in the light source units 5A, 5B, and 5C are each fixed to the exterior case 50 at a position above the downward reflecting surface 53D of the reflector 52, that is, to the upper portion of the light source unit 5A, 5B, or 5C. Downward light emitted from LED 51 passes through the opening 54 formed in the downward reflecting surface 53D and arrives at the forward reflecting surface 53F fixed to the lower portion of the light source unit 5A, 5B, or 5C. Reference numeral 55 in FIG. 6 denotes a headlight cover made of transparent glass or resin.

Light incident on the forward reflecting surface 53F is distributed to a predetermined location by utilizing, for example, the overall shape of the forward reflecting surface 53F itself and the different reflective directions set in advance for the respective small partition portions 53Fa.

### Headlight Light Distribution Characteristics

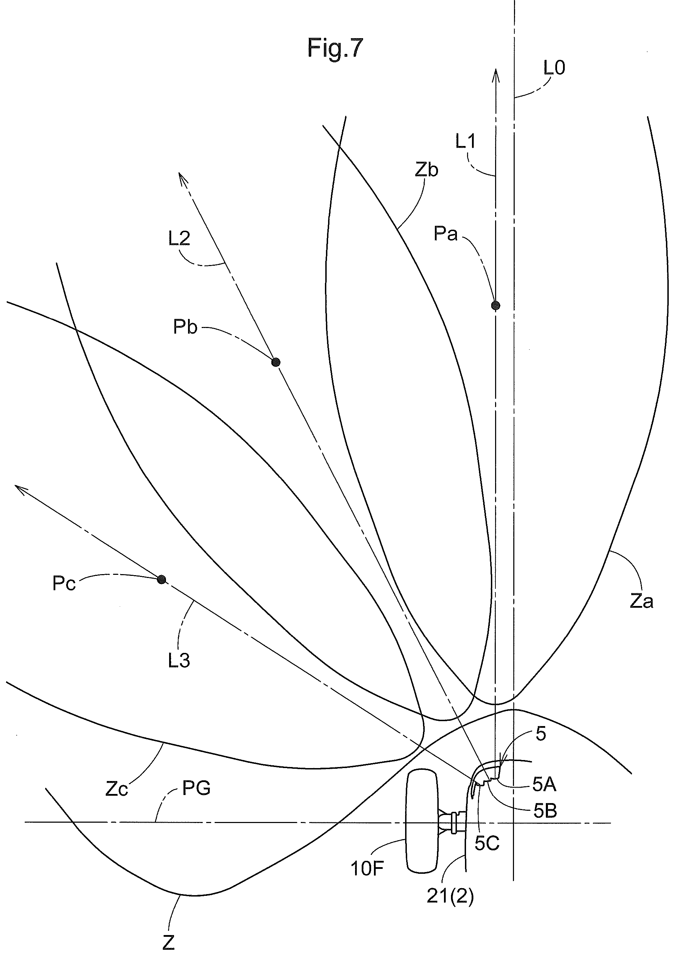

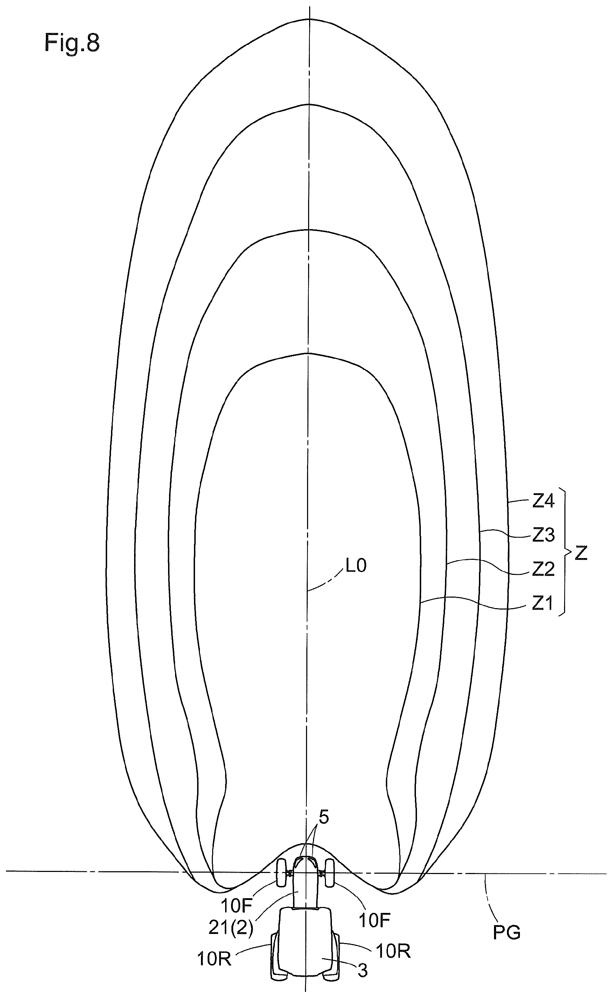

The light distribution state of the headlight 5 will be described below with reference to FIGS. 7 and 8.

In each of the light source units 5A, 5B, and 5C, the light incident on the forward reflecting surface 53F of the reflector 52 is accurately distributed toward a predetermined area by effectively utilizing, for example, the overall shape of the forward reflecting surface 53F itself, the positions and shapes of the lateral reflecting surface 53S, the upward reflecting surface 53U, and the downward reflecting surface 53D, and the disperse reflection function for disperse reflection toward different predetermined directions set in advance for the respective small partition portions 53Fa of the forward reflecting surface 53F.

The headlights 5 provided on the left and right sides of the motor section 2 distribute light as shown in FIG. 8.

In FIG. 8, for each predetermined luminous intensity level that has been set in advance, a light distribution area Z of light emitted from the headlights 5 is divided, for convenience, into four areas, namely a first light distribution area Z1, a second light distribution area Z2, a third light distribution area Z3, and a fourth light distribution area Z4.

The first light distribution area Z1 is the area with the highest luminous intensity, and is set as an area where the road surface and crops in the travel direction can be clearly seen. The first light distribution area Z1 has a left-right width that is sufficiently wider than the left-right width of the body of the tractor, and a front-rear length that allows work to be performed without difficulty while looking ahead, such as in normal agricultural work.

The second light distribution area Z2, the third light distribution area Z3, and the fourth light distribution area Z4 indicate areas in which the predetermined luminous intensity level gradually decreases successively, and the area indicated by the fourth light distribution area Z4 is the area directly illuminated by light emitted from the headlights 5, that is, the range directly reached by the reflected light dispersed by the reflectors 52 in the light source units 5A, 5B, and 5C.

The area outside the fourth light distribution area Z4 is not directly reached by light emitted from the headlights 5, but there is a large amount of scattered light in the peripheral area of the fourth light distribution area Z4, and therefore it is possible to see, to some extent, the ground and the positions of the front wheels 10F, for example.

In actuality, as shown in FIG. 8, the ground contact points PG of the front wheels 10F are outside the fourth light distribution area Z4, but can be seen due to scattered light.

The light distribution characteristics of the left and right headlights 5 shown in FIG. 8 are thought to be a result of illumination such as in the conceptual diagram shown in FIG. 7.

FIG. 7 shows a schematic diagram of illumination of the left headlight 5. The right headlight 5 is provided symmetrically to the left headlight 5, and therefore a description thereof will be omitted, and only the left headlight 5 will be described.

The range indicated by a first virtual area Za in FIG. 7 is assumed to be the area in which light emitted only from the light source unit 5A, which is innermost in the left-right direction of the body, among the light source units 5A, 5B, and 5C of the headlight 5, is considered to be distributed at a predetermined luminous intensity level or higher. When an areal center Pa of the first virtual area Za is connected to the light source unit 5A by a first virtual line segment L1, the first virtual line segment L1 extends along a body center line L0 extending in the front-rear direction.

Similarly, a range indicated by a third virtual area Zc in FIG. 7 is assumed to be the area in which light emitted only from the light source unit 5C at the outermost side in the left-right direction of the body is considered to be distributed at a predetermined luminous intensity level or higher. When an areal center Pc of the third virtual area Zc is connected to the light source unit 5C by a third virtual line segment L3, the third virtual line segment L3 extends in a direction more laterally outward from the vehicle body center line L0 than the first virtual line segment L1 does.

A range indicated by a second virtual area Zb in FIG. 7 is assumed to be the area in which light emitted only from the light source unit 5B, which is located between the innermost and outermost positions in the left-right direction of the body, is considered to be distributed at a predetermined luminous intensity level or higher. When an areal center Pb of the second virtual area Zb is connected to the light source unit 5B by a second virtual line segment L2, the second virtual line segment L2 is located between the first virtual line segment L1 and the third virtual line segment L3.

The first virtual area Za, the second virtual area Zb, and the third virtual area Zc of the left and right headlights 5 are overlapped with each other, and, for example, light beams with a luminous intensity level lower than the predetermined luminous intensity level or higher in the first virtual area Za, the second virtual area Zb, and the third virtual area Zc also overlap each other, thus resulting in the appearance of the light distribution area shown in FIG. 8.

### Other Embodiments

The following describes other embodiments. The following alternative embodiments may be applied in combination with the above-described embodiment as long as no contradiction arises. The scope of the present invention is not limited to the content of these embodiments.
(1) In the above embodiment, the driving section 3 is illustrated as having a structure including the cabin 30, but the present invention is not limited to this structure.

For example, a structure is possible in which the steering wheel 31, the driver seat 32, and the like are provided, but the cabin 30 is not provided.

Other configurations may be the same as those of the above-described embodiment.

(2) In the above-described embodiment, a tractor having a four-wheel drive structure with steerable driven front wheels 10F and non-steerable driven rear wheels 10R as the travel device 10 is illustrated as an example, but the present invention is not limited to this structure.

For example, the vehicle may be a two-wheel drive vehicle in which the front wheels 10F are front wheels 10F that are steerable and non-driven, or the front wheels 10F may be non-steerable and the rear wheels 10R may be steerable.

Also, instead of wheels, either the front travel device or the rear travel device may be made steerable and the other one may be a crawler travel device, or a series-type crawler travel device in which the front travel device and the rear travel device are integrated may be used.

Other configurations may be the same as those of the above-described embodiment.

(3) In the above embodiment, a structure in which the diesel engine 20 is used as the drive source disposed in the motor section 2 is illustrated as an example, but the present invention is not limited to this structure.

For example, besides using a gasoline engine, a hybrid engine or an electric motor other than an internal combustion engine may be used as the drive source.

Other configurations may be the same as those of the above-described embodiment.

(4) In the above-described embodiment, an example is illustrated in which the headlight 5 includes the light source units 5A, 5B, and 5C, each of which includes a combination of an LED 51 and a reflector 52, but the present invention is not necessarily limited to this structure, and for example, the headlight 5 may be configured to use a light bulb such as a halogen lamp as the light source.

Other configurations may be the same as those of the above-described embodiment.

(5) In the above-described embodiment, an example is illustrated in which the headlight 5 includes the three light source units 5A, 5B, and 5C, each of which includes a combination of an LED 51 and a reflector 52, but the present invention is not necessarily limited to this structure.

For example, the number of light source units 5A, 5B, and 5C may be one, two, or four or more. Also, the combination of the LED 51 and the reflector 52 in each of the light source units is not limited to a combination of one LED 51 with one reflector 52, and it is also possible to adopt any appropriate combination, such as a combination of multiple LEDs 51 with one reflector 52.

Other configurations may be the same as those of the above-described embodiment.

### Industrial Applicability

The present invention is applicable to not only tractors, but also to agricultural work vehicles (e.g., front loaders, grass cutters, and rice transplanters), civil engineering work vehicles (e.g., wheel loaders), forklifts, transport vehicles, and the like.

### Description of Reference Signs

- 2: Motor section
- 3: Driving section
- 4: Heat shield layer
- 5: Headlight
- 5A, 5B, 5C: Light source unit
- 10F: Front travel device
- 10R: Rear travel device
- 20: Drive source
- 21: Bonnet
- 51: LED
- 52: Reflector
- PG: Ground contact portion
- Z: Light distribution area

## Claims

1. A work vehicle comprising:
a front travel device;
a rear travel device;
a body supported by the front travel device and the rear travel device;
a motor section in a front portion of the body; and
a driving section rearward of the motor section in the body,
the front travel device being located forward of the driving section and laterally outward of a lateral side portion of the motor section at a distance from the lateral side portion in a left-right direction,
the front travel device having a ground contact portion rearward of a front end of the motor section,
the motor section including a headlight configured to illuminate an area ahead of the body, and
the headlight having a light distribution area including an area rearward of a front end of the ground contact portion.

2. The work vehicle according to claim 1,
wherein the motor section further includes:
a drive source; and
a bonnet configured to house the drive source, and
the headlight is at a location including an intersection between a front edge of the bonnet and a lateral side wall portion of the bonnet.

3. The work vehicle according to claim 1 or 2,
wherein the headlight includes a light source unit including a combination of an LED as a light source and a reflector configured to disperse and reflect light emitted from the LED.

4. The work vehicle according to claim 3,
wherein the LED is in an upper portion of the light source unit and emits light downward toward the reflector in a lower portion of the light source unit.

5. The work vehicle according to any one of claims 1 to 4,
wherein the headlight is at a location overlapped with a front portion of the front travel device in a front-rear direction.

6. The work vehicle according to any one of claims 1 to 5,
wherein the front travel device is a steerable wheel.

7. The work vehicle according to any one of claims 1 to 6,
wherein the ground contact portion is outside the light distribution area directly irradiated with light emitted from the headlight.
